# EUROPEAN PATENT APPLICATION

(11) **EP 4 671 838 A1**
(43) Date of publication of application: **31.12.2025**
(21) Application number: 24759987.1
(22) Date of filing: 22.01.2024
(51) Int. Cl.: G02B 6/36, G02B 6/02, G02B 6/40

(54) **FERRULE, OPTICAL CONNECTOR, AND METHOD FOR MANUFACTURING OPTICAL CONNECTOR**

(30) Priority: 21.02.2023 JP 2023025311
(71) Applicant: Sumitomo Electric Industries, Ltd., Osaka-shi, Osaka 541-0041 (JP)
(72) Inventor: HASEGAWA Koki, Osaka-shi, Osaka 541-0041 (JP); MORISHIMA Tetsu, Osaka-shi, Osaka 541-0041 (JP); MOURI Shintaro, Osaka-shi, Osaka 541-0041 (JP); SASAKI Dai, Osaka-shi, Osaka 541-0041 (JP); MIZUMOTO Yukihiro, Osaka-shi, Osaka 541-0041 (JP)
(74) Representative: TBK
(86) International application number: PCT/JP2024/001663
(87) International publication number: WO 2024/176680

(57) **Abstract**

This ferrule comprises: a ferrule main body having a ferrule front end and a ferrule back end; an introduction hole provided in the ferrule main body; and a fiber insertion hole configured to be able to hold tip portions of a plurality of optical fibers. The fiber insertion hole has a taper portion and a fiber holding portion. The taper portion includes a taper front end and a taper back end, and extends from the taper back end to the taper front end such that the inner diameter of the taper portion at the taper front end is smaller than the inner diameter of the taper portion at the taper back end. The angle between the center line axis of each of the plurality of fiber insertion holes and a taper straight line connecting the taper front end and the taper back end of the taper portion in a cross section along the center line axis is 1-14 degrees.

## Description

### TECHNICAL FIELD

The present disclosure relates to a ferrule, an optical connector, and a method of manufacturing an optical connector. This application claims priority based on Japanese Patent Application No. 2023-025311 filed on Feb. 21, 2023, and the entire contents of the Japanese patent application are incorporated herein by reference.

### BACKGROUND ART

Patent literature 1 discloses a ferrule having a fiber insertion hole (fine hole) into which an optical fiber is inserted. In this ferrule, the fiber insertion hole extends to the front end of the ferrule along a longitudinal direction of the ferrule. A part of an inner surface of the fiber insertion hole is formed so that an inner diameter decreases as it approaches the front end of the ferrule.

### CITATION LIST

### PATENT LITERATURE

Patent literature 1: Japanese Unexamined Patent Application Publication No. 2007-163626

### SUMMARY OF INVENTION

### Means for Solving the Problem

A ferrule according to an embodiment of the present disclosure includes a ferrule body, an introduction hole, and a plurality of fiber insertion holes. The ferrule body includes a ferrule front end and a ferrule rear end opposite to the ferrule front end in a first direction. The introduction hole is provided in the ferrule body in such a manner as to extend from the ferrule rear end toward the ferrule front end. The plurality of fiber insertion holes is each configured to be capable of holding an end portion of a corresponding one of a plurality of optical fibers, the plurality of fiber insertion holes extending along the first direction from a portion of the introduction hole positioned near the ferrule front end to the ferrule front end. Each of the plurality of fiber insertion holes includes a tapered portion having a tapered shape and a fiber holding portion communicating with the tapered portion at a position near the ferrule front end and extending to the ferrule front end along the first direction. The tapered portion includes a tapered front end and a tapered rear end opposite to the tapered front end in the first direction. The tapered portion extends from the tapered rear end to the tapered front end such that an inner diameter of the tapered portion at the tapered front end is smaller than an inner diameter of the tapered portion at the tapered rear end. An angle between a centerline axis of each of the plurality of fiber insertion holes and a tapered straight line, the tapered straight line connecting the tapered front end and the tapered rear end of the tapered portion in a cross section along the centerline axis, is from 1 degree to 14 degrees.

### BRIEF DESCRIPTION OF THE DRAWINGS

FIG. 1 is a perspective view showing an optical connector according to an embodiment.
FIG. 2 is a cross-sectional view taken along line II-II shown in FIG. 1.
FIG. 3 is a cross-sectional view showing a ferrule in the optical connector of FIG. 1.
FIG. 4 is a diagram showing an end surface of an optical fiber in the optical connector of FIG. 1.
FIG. 5 is a schematic view showing a fiber insertion hole in the ferrule of FIG. 3.
FIG. 6 is a flowchart showing a method of manufacturing the optical connector according to an embodiment.
FIG. 7 is a schematic view showing a fiber insertion hole in a conventional ferrule.
FIG. 8 is a schematic view showing a case where an optical fiber is inserted into the fiber insertion hole in the conventional ferrule.
FIG. 9 is a schematic view showing an axial deviation caused by a rotation of the optical fiber when the optical fiber is inserted into the fiber insertion hole in the conventional ferrule.
FIG. 10 is a schematic view showing the fiber insertion hole in the ferrule according to a modification.
FIG. 11 is a schematic view showing the fiber insertion hole in the ferrule according to a modification.
FIG. 12 is a schematic view showing the fiber insertion hole in the ferrule according to a modification.

### DETAILED DESCRIPTION

### [Problems to be Solved by Present Disclosure]

In the ferrule described in Patent literature 1, when the optical fiber is inserted into the fiber insertion hole, the optical fiber may rotate in contact with the inner surface of the portion of the fiber insertion hole where the inner diameter decreases, and may cause a deviation (axial deviation) along the circumferential direction of the optical fiber. Specifically, when the optical fiber is inserted into the fiber insertion hole while being in contact with a tapered inner surface, the optical fiber is rotated by a frictional force received from the inner surface of the fiber insertion hole, and the axial deviation occurs. Thus, when an optical fiber (for example, a multi-core fiber) for which rotational alignment is required is inserted into such a ferrule and the axial deviation occurs, the optical coupling efficiency between the optical fiber with the axial deviation and an optical fiber held by another ferrule is reduced.

### [Advantageous Effects of Present Disclosure]

According to the present disclosure, when an optical fiber for which rotational alignment is required is inserted into a ferrule, it is possible to reduce a decrease in optical coupling efficiency between an optical fiber held by the ferrule and an optical fiber held by another ferrule.

### [Description of Embodiments of Present Disclosure]

First, the contents of the embodiments of the present disclosure will be listed and described.
[1] A ferrule according to an embodiment includes a ferrule body, an introduction hole, and a plurality of fiber insertion holes. The ferrule body includes a ferrule front end and a ferrule rear end opposite to the ferrule front end in a first direction. The introduction hole is provided in the ferrule body in such a manner as to extend from the ferrule rear end toward the ferrule front end. The plurality of fiber insertion holes is each configured to be capable of holding an end portion of a corresponding one of a plurality of optical fibers, the plurality of fiber insertion holes extending along the first direction from a portion of the introduction hole positioned near the ferrule front end to the ferrule front end. Each of the plurality of fiber insertion holes includes a tapered portion having a tapered shape and a fiber holding portion communicating with the tapered portion at a position near the ferrule front end and extending to the ferrule front end along the first direction. The tapered portion includes a tapered front end and a tapered rear end opposite to the tapered front end in the first direction. The tapered portion extends from the tapered rear end to the tapered front end such that an inner diameter of the tapered portion at the tapered front end is smaller than an inner diameter of the tapered portion at the tapered rear end. An angle between a centerline axis of each of the plurality of fiber insertion holes and a tapered straight line, the tapered straight line connecting the tapered front end and the tapered rear end of the tapered portion in a cross section along the centerline axis, is from 1 degree to 14 degrees.
   In this ferrule, the angle between the centerline axis of each of the plurality of fiber insertion holes and the tapered straight line connecting the tapered front end and the tapered rear end of the tapered portion in a cross section along the centerline axis, is from 1 degree to 14 degrees, and a shape of the tapered portion is a gently tapered shape. As described above, according to the taper configuration which is gentler than the conventional taper configuration, when the optical fiber is inserted into the fiber insertion hole and comes into contact with the inner surface of the tapered portion, the frictional force received from the inner surface of the tapered portion is reduced as compared with the conventional ferrule. Thus, the optical fiber is prevented from rotating to cause axial deviation when the optical fiber is inserted into the fiber insertion hole. As a result, when the optical fiber for which rotational alignment is required is inserted into the ferrule, the axial deviation of the optical fiber is reduced, and thus it is possible to reduce a decrease in optical coupling efficiency between the optical fiber and the optical fiber held by another ferrule.
[2] As one embodiment, in the above [1], each of the tapered straight lines may coincide with an inner surface of a corresponding one of the tapered portions in the cross section taken along a corresponding one of the centerline axes of the fiber insertion holes. In this case, since the inner surface of the tapered portion is flat, the optical fiber in contact with the inner surface of the tapered portion is further prevented from rotating to cause axial deviation. As a result, when the optical fiber for which rotational alignment is required is inserted into the ferrule, the axial deviation of the optical fiber is further reduced, and thus it is possible to further reduce a decrease in optical coupling efficiency between the optical fiber and the optical fiber held by another ferrule.
[3] As one embodiment, in the above [1], an angle between a tangent line at a contact point on an inner surface of each of the tapered portions and a corresponding one of the centerline axes of the fiber insertion holes in the cross section taken along the centerline axis may decrease as the contact point comes closer to a corresponding one of the tapered front ends in the first direction. In this case, the inclination of the inner surface of the tapered portion becomes gentler as it approaches the tapered front end. Thus, it is possible to further reduce the frictional force that the optical fiber receives from the inner surface of the tapered portion in the vicinity of the tapered front end. In addition, the inner diameter of the tapered portion at the tapered rear end can be increased without changing the length of the tapered portion in the first direction. Thus, the optical fiber is prevented from coming into contact with the inner surface of the tapered portion in the vicinity of the tapered rear end when the optical fiber is inserted into the fiber insertion hole. As described above, when the optical fiber is inserted into the fiber insertion hole, the optical fiber is prevented from coming into contact with the inner surface of the tapered portion and rotating to cause axial deviation. As a result, when the optical fiber for which rotational alignment is required is inserted into the ferrule, the axial deviation of the optical fiber is further reduced, and thus it is possible to further reduce a decrease in optical coupling efficiency between the optical fiber and the optical fiber held by another ferrule.
[4] As one embodiment, in any one of the above [1] to [3], each of the plurality of fiber insertion holes may further include an introduction portion. The introduction portion extends from the introduction hole along the first direction and communicating with the tapered portion at the tapered rear end. The introduction portion may have a constant inner diameter. In this case, since the introduction portion configured to first receives the optical fiber introduced from the introduction hole has a constant inner diameter, the optical fiber can be inserted into the fiber insertion hole while preventing the optical fiber from coming into contact with the inner surface of the introduction portion. As described above, when the optical fiber is inserted into the fiber insertion hole, the optical fiber is further prevented from rotating to cause axial deviation.
[5] As one embodiment, in any one of the above [1] to [4], a ratio of a length of each of the tapered portions to a length of a corresponding one of the plurality of fiber insertion holes in the first direction may be from 1/5 to 3/4. In this case, since the ratio of the lengths is equal to or less than 3/4, the fiber holding portion of the fiber insertion hole can be sufficiently long in the first direction. Thus, each fiber holding portion can stably support each optical fiber. Further, since the ratio of the lengths is equal to or more than 1/5, the tapered portion can be sufficiently long in the first direction. Thus, the inner diameter of the tapered portion at the tapered rear end can be sufficiently increased, and thus, when the optical fiber is inserted into the fiber insertion hole, the optical fiber is further prevented from coming into contact with the inner surface of the tapered portion in the vicinity of the tapered rear end and rotating to cause axial deviation.
[6] As an embodiment, in any one of the above-described [1] to [5], the angle between the centerline axis of each of the plurality of fiber insertion holes and a corresponding one of the tapered straight lines in a cross section taken along the centerline axis may be from 5 degrees to 10 degrees. In this case, when the optical fiber is inserted into the fiber insertion hole, the optical fiber is further prevented from rotating to cause axial deviation. As a result, when the optical fiber for which rotational alignment is required is inserted into the ferrule, the axial deviation of the optical fiber is further reduced, and thus it is possible to further reduce a decrease in optical coupling efficiency between the optical fiber and the optical fiber held by another ferrule.
[7] An optical connector according to an embodiment includes the ferrule according to any one of [1] to [6] and a plurality of optical fibers. The plurality of optical fibers is each configured to be held in a corresponding one of the plurality of fiber insertion holes. Each of the plurality of optical fibers is any one of a multi-core optical fiber, a polarization-maintaining fiber, and a bundle fiber. In this optical connector, a plurality of optical fibers is fixed to the ferrule. According to this configuration, the optical fiber is prevented from rotating to cause axial deviation when inserted into the fiber insertion hole. Here, the optical fiber is any one of a multi-core optical fiber, a polarization-maintaining fiber, and a bundle fiber, and is a fiber for which rotational alignment is required. Thus, when the optical fiber is inserted into the ferrule, the axial deviation of the optical fiber is further reduced, and thus it is possible to further reduce a decrease in optical coupling efficiency between the optical fiber and the optical fiber held by another ferrule.
[8] A method of manufacturing an optical connector according to an embodiment includes preparing the ferrule according to any one of claim 1 to claim 6, preparing a plurality of optical fibers, and inserting a multi-core optical fiber of the plurality of optical fibers into a corresponding one of the plurality of fiber insertion holes. Each of the plurality of optical fibers is any one of a multi-core optical fiber, a polarization-maintaining fiber, and a bundle fiber. In this method of manufacturing an optical connector, a ferrule having a fiber insertion hole with a gently tapered shape is used, and an optical fiber is inserted into such a fiber insertion hole. Thus, the optical fiber is further prevented from rotating to cause axial deviation. Here, the optical fiber is any one of a multi-core optical fiber, a polarization-maintaining fiber, and a bundle fiber, and is a fiber for which rotational alignment is required. Thus, it is possible to realize an optical connector that can further reduce the reduction in the optical coupling efficiency between the optical fiber and the optical fiber held by the other ferrule by further reducing the axial deviation of the optical fiber when the optical fiber is inserted into the ferrule.

### [Details of Embodiments of Present Disclosure]

Specific examples of a ferrule, an optical connector, and a method of manufacturing an optical connector according to an embodiment of the present disclosure will be described below with reference to the drawings. In the following description, the same reference numerals are used for the same elements or elements having the same functions, and redundant description will be omitted. The present invention is not limited to these examples, but is defined by the scope of the claims, and is intended to include all modifications within the meaning and scope equivalent to the scope of the claims.

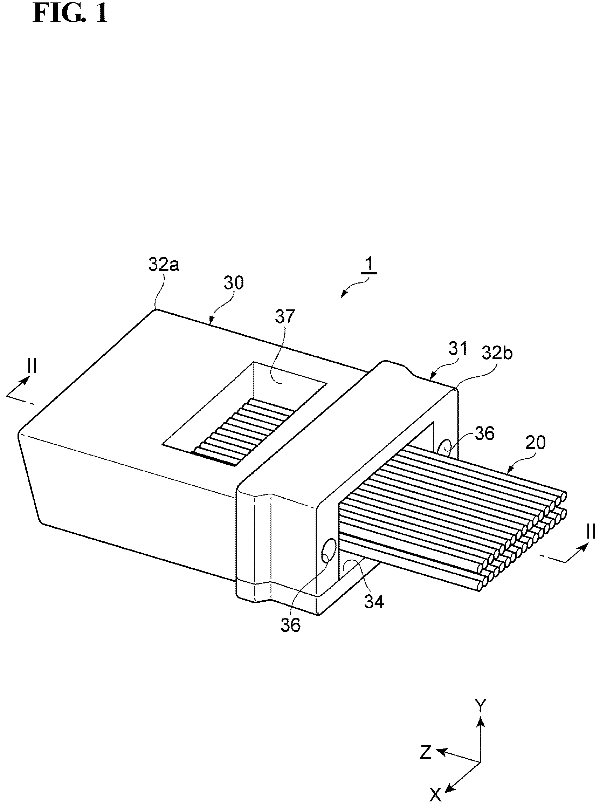

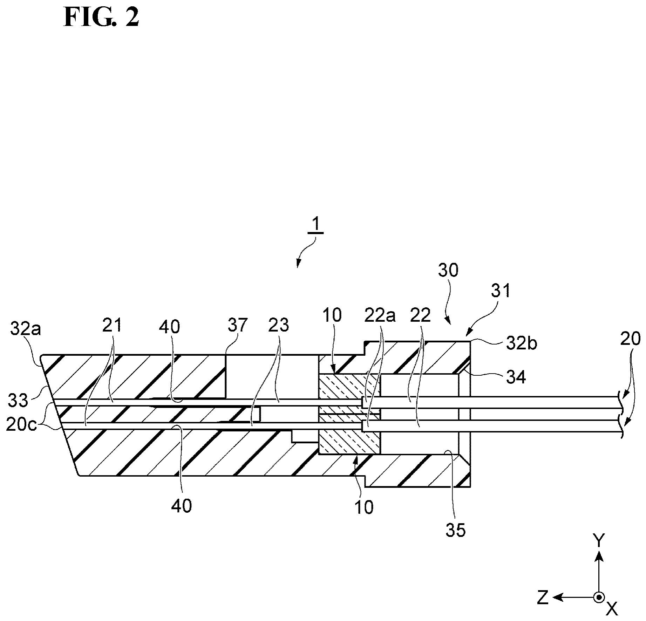

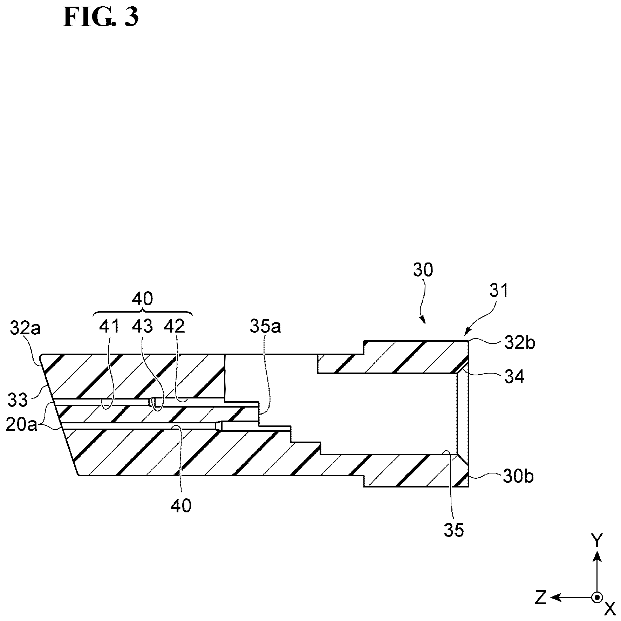

FIG. 1 is a perspective view showing an optical connector according to the embodiment. FIG. 2 is a cross-sectional view taken along line II-II shown in FIG. 1. FIG. 3 is a cross-sectional view showing a ferrule of the optical connector of FIG. 2. As shown in FIGS. 1 and 2, an optical connector 1 includes a plurality of holding components 10, a plurality of multi-core optical fibers 20 (hereinafter also referred to as "MCF 20"), and a ferrule 30. Hereinafter, a width direction of the optical connector 1 is defined as an X direction, a height direction of the optical connector 1 is defined as a Y direction, and a longitudinal direction of the optical connector 1, which is a direction intersecting the X direction and the Y direction, is defined as a Z direction (first direction).

As shown in FIG. 2, the holding component 10 is a rectangular parallelepiped shape. The cross-sectional shape of the holding component 10 intersecting the X direction is a rectangular shape. The holding component 10 is made of, for example, quartz glass, a metal material, or a resin material. The holding component 10 is configured to hold the plurality of MCFs 20. For example, the holding component 10 has a plurality of V-grooves extending in the Z-direction. The plurality of V-grooves is arranged along the X direction and each hold a corresponding one of the plurality of MCFs 20. As an example, the plurality of MCFs 20 is respectively placed and fixed in the plurality of V-grooves.

The holding components 10 (for example, two) are each arranged in the Y direction. In the example shown in FIG. 2, the two holding components 10 are arranged in the Y direction. Each holding component 10 holds 16 MCFs 20 arranged in the X direction. The holding components 10 are fixed to each other in a state where one holding component 10 of the two holding components 10 is inverted in the Z direction.

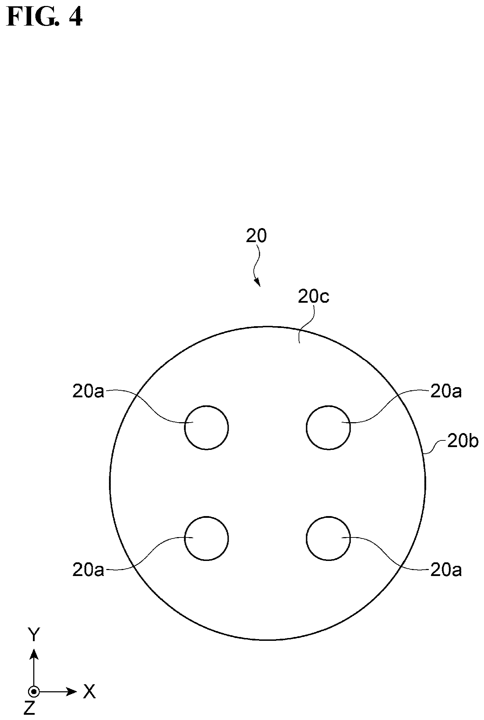

Each MCF 20 has at least two cores in a region excluding the central axis line. FIG. 4 is a diagram showing an end surface of the MCF 20. For example, each MCF 20 has a plurality of cores 20a disposed at equal intervals around the central axis line. Each MCF 20 has a cladding 20b covering the plurality of cores 20a. As shown in FIG. 2, each MCF 20 has an end portion 21 including an end surface 20c, a coating portion 22, and a coating-removed portion 23. The plurality of MCFs 20 is held in a plurality of fiber insertion holes 40, respectively. The plurality of MCFs 20 is fixed to the ferrule 30 with an adhesive.

The coating portion 22 includes the plurality of cores 20a, the cladding 20b covering the plurality of cores 20a, and a resin coating covering the cladding. As shown in FIG. 2, the end portion 21 and the coating-removed portion 23 are portions where the cladding 20b is exposed by removing a predetermined length of the resin coating from the end surface 20c of each MCF 20. The end portion 21 extends from the end surface 20c toward an introduction hole 35 along the Z direction. The coating-removed portion 23 is continuous with the end portion 21. The coating-removed portion 23 extends in the introduction hole 35 along the Z direction to a first end 22a of the coating portion 22 in the Z direction. The coating portion 22 extends from the first end 22a along the Z direction.

The ferrule 30 includes a ferrule body 31 configured to accommodate the plurality of holding components 10 and the plurality of MCFs 20 therein. The ferrule body 31 has a front end 32a (ferrule front end) and a rear end 32b (ferrule rear end) opposite to the front end 32a in the Z direction. The ferrule body 31 includes a front end surface 33 provided at the front end 32a and an opening 34 provided at the rear end 32b. As shown in FIGS. 1 and 2, the ferrule 30 further includes the introduction hole 35, the plurality of fiber insertion holes 40, a pair of guide holes 36, and a window 37. The front end surface 33 intersects the Z direction and is inclined with respect to a plane perpendicular to the Z direction. In the example shown in FIG. 2, the front end surface 33 is flush with the end surface 20c of each MCF 20.

The introduction hole 35 is provided in the ferrule body 31 from the rear end 32b toward the front end 32a. The introduction hole 35 extends, for example, from the opening 34 to the center position of the ferrule 30 in the Z direction. The introduction hole 35 is open at the opening 34. The cross-section of the introduction hole 35 intersecting the Z direction has, for example, a rectangular shape with the X direction as the longitudinal direction. The introduction hole 35 collectively holds the holding components 10. The holding component 10 is disposed and positioned in the introduction hole 35.

As shown in FIGS. 2 and 3, each of the plurality of fiber insertion holes 40 extends from a portion 35a of the introduction hole 35 near the front end 32a to the front end 32a along the Z direction. The portion 35a of the introduction hole 35 near the front end 32a is a portion closer to the front end 32a than the center position of the introduction hole 35 in the Z direction. Each of the plurality of fiber insertion holes 40 holds a corresponding one of the plurality of MCFs 20. For example, the plurality of fiber insertion holes 40 is each configured to be capable of holding the end portion 21 of a corresponding one of the plurality of MCFs 20. The plurality of fiber insertion holes 40 is arranged one dimensionally or two dimensionally on the front end surface 33. The plurality of fiber insertion holes 40 is arranged along at least one of the X direction or the Y direction on the front end surface 33. For example, a row of 16 fiber insertion hole rows arranged along the X direction is arranged in two rows along the Y direction. Each fiber insertion hole 40 holds the end portion 21 of each MCF 20.

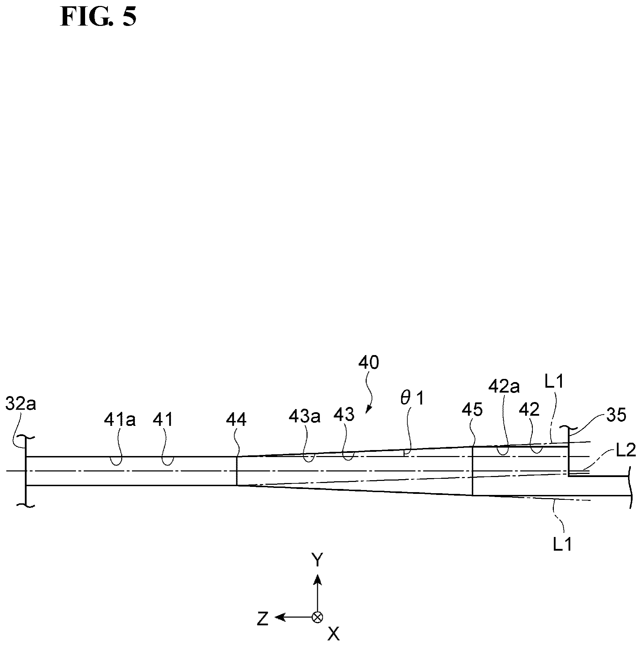

Here, the configuration of the fiber insertion hole 40 will be described in detail with reference to FIG. 5. FIG. 5 is a schematic cross-sectional view showing a cross-sectional shape of the fiber insertion hole 40. As shown in FIG. 5, each of the plurality of fiber insertion holes 40 has a fiber holding portion 41, an introduction portion 42, and a tapered portion 43 connecting the fiber holding portion 41 and the introduction portion 42. The fiber holding portion 41 extends from the front end 32a toward the introduction hole 35 along the Z direction. The fiber holding portion 41 is open at the front end 32a. The rear end of the fiber holding portion 41 communicates with the tapered portion 43. The fiber holding portion 41 has a constant inner diameter. The inner diameter of the fiber holding portion 41 corresponds to the outer diameter of the end portion 21 of the MCF 20. For example, the inner diameter of the fiber holding portion 41 may be equal to the outer diameter of the end portion 21 of the MCF 20 or slightly larger than the outer diameter of the end portion 21 of the MCF 20. The inner diameter of the fiber holding portion 41 is, for example, 0.126 mm. The length of the fiber holding portion 41 in the Z direction is, for example, 1.7 mm. The cross-sectional shape of the fiber holding portion 41 intersecting the Z direction corresponds to the cross-sectional shape of the end portion 21 of the MCF 20, and is, for example, a circular shape. The fiber holding portion 41 holds the end portion 21 of the MCF 20 when the end portion 21 is inserted into the fiber insertion hole 40.

The introduction portion 42 extends from the introduction hole 35 toward the front end 32a along the Z direction. The introduction portion 42 is open at the introduction hole 35. The front end of the introduction portion 42 communicates with the tapered portion 43. The introduction portion 42 has a constant inner diameter. The inner diameter of the introduction portion 42 is larger than the inner diameter of the fiber holding portion 41. The inner diameter of the introduction portion 42 is larger than the outer diameter of the MCF 20. The inner diameter of the introduction portion 42 is, for example, 2.0 mm. The length of the introduction portion 42 in the Z direction is, for example, 1.0 mm. The cross-sectional shape of the introduction portion 42 intersecting the Z direction corresponds to the cross-sectional shape of the end portion 21 of the MCF 20, and is, for example, a circular shape. When the end portion 21 of the MCF 20 is inserted into the fiber insertion hole 40, the end portion 21 passes through the inside of the introduction portion 42 and reaches the tapered portion 43.

The tapered portion 43 has a tapered shape. The tapered portion 43 includes a front end 44 (tapered front end) and a rear end 45 (tapered rear end) on the opposite side of the front end 44 in the Z direction. The cross section of the fiber insertion hole 40 along a centerline axis L2 and an inner surface 43a of the tapered portion 43 have two intersection lines. The front end 44 and the rear end 45 are both ends of one of the two intersection lines in the Z direction.

The tapered portion 43 extends from the front end 44 to the rear end 45 along the Z direction. The ratio of the length of the tapered portion 43 to the length of the fiber insertion hole 40 in the Z direction may be from 1/5 to 3/4, may be from 2/5 to 2/3, and is, for example, 2/5. The length of the tapered portion 43 in the Z direction is, for example, 1.3 mm. The tapered portion 43 communicates with the fiber holding portion 41 at the front end 44. At the front end 44, the inner surface 43a of the tapered portion 43 is continuous with an inner surface 41a of the fiber holding portion 41. The inner diameter of the tapered portion 43 at the front end 44 is equal to the inner diameter of the fiber holding portion 41. The tapered portion 43 communicates with the introduction portion 42 at the rear end 45. At the rear end 45, the inner surface 43a of the tapered portion 43 is continuous with an inner surface 42a of the introduction portion 42. The inner diameter of the tapered portion 43 at the rear end 45 is equal to the inner diameter of the introduction portion 42.

The inner diameter of the tapered portion 43 at the front end 44 is smaller than the inner diameter of the tapered portion 43 at the rear end 45. The inner diameter of the tapered portion 43 increases from the front end 44 toward the rear end 45. The change in the inner diameter of the tapered portion 43 is constant. In the cross section of the fiber insertion hole 40 along the centerline axis L2, a straight line L1 (tapered straight line) connecting the front end 44 and the rear end 45 of the tapered portion 43 coincides with the inner surface 43a of the tapered portion 43. That is, the intersection line between the inner surface 43a of the tapered portion 43 and the cross section along the centerline axis L2 is a straight line. An angle θ1 between the straight line L1 and the centerline axis L2 of the fiber insertion hole 40 may be from 1 degree to 14 degrees, may be from 5 degrees to 10 degrees, or may be, for example, 8 degrees. When the end portion 21 of the MCF 20 is inserted into the fiber insertion hole 40, the end portion 21 comes into contact with the inner surface 43a of the tapered portion 43, and thus the end portion 21 gently moves in a direction approaching the fiber holding portion 41 while approaching the centerline axis L2 of the fiber insertion hole 40. As described above, the end portion 21 is guided to the fiber holding portion 41 of the fiber insertion hole 40 and is aligned.

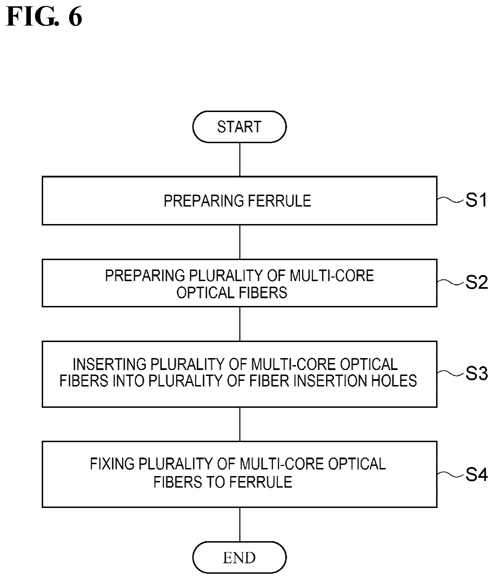

Next, a method of manufacturing the optical connector 1 using the ferrule 30 described above will be described. FIG. 6 is a flowchart showing a method of manufacturing the optical connector 1. When the optical connector 1 is manufactured, first, the ferrule 30 is prepared (step S1). The plurality of MCFs 20 is prepared (step S2).

Subsequently, the corresponding MCF 20 of the plurality of MCFs 20 is inserted into each of the plurality of fiber insertion holes 40 (step S3). In particular, the coating-removed portions 23 of the plurality of MCFs 20 are respectively placed in the plurality of V-grooves of the holding component 10, and the MCF 20 are rotationally aligned around the center axes. At this time, each MCF 20 is rotationally aligned one by one with respect to the holding component 10. Thereafter, the holding component 10 and each MCF 20 are fixed to each other with an adhesive, and the plurality of holding components 10 is stacked in the Y direction. The adhesive is, for example, a UV curable adhesive or a thermosetting adhesive. Then, in a state where the holding components 10 are fixed to each other, each of the holding components 10 is inserted into the introduction holes 35 of the ferrule 30. At this time, although the plurality of MCFs 20 is held by the holding component 10 and fixed with the adhesive, a certain degree of rotation (axial deviation) may occur on the distal end side of the holding component 10.

The end portion 21 of the MCF 20 in the state where the rotational alignment is temporarily fixed in this manner is inserted from the introduction hole 35 and further inserted into the fiber insertion hole 40. At this time, in the ferrule 30 used in the embodiment, since the tapered portion 43 of the fiber insertion hole 40 has a gently tapered shape as described above, axial deviation is less likely to occur when the MCF 20 (end portion 21) temporarily fixed to the holding component 10 comes into contact with the inner surface of the fiber insertion hole 40. Thus, the end portion 21 of the MCF 20 is housed and held in the fiber holding portion 41 of the fiber insertion hole 40 in a state where the axial deviation of the MCF 20 is reduced.

Subsequently, the plurality of MCFs 20 is fixed to the ferrule 30 (step S4). In detail, the adhesive is introduced through the window 37 of the ferrule 30, and the plurality of holding components 10 and the plurality of MCFs 20 are fixed to the ferrule 30 with the adhesive. For example, a thermosetting adhesive is introduced through the window 37 provided in an upper portion of the ferrule 30 and is thermally cured, thereby fixing the fiber insertion hole 40 and the end portion 21. In this manner, the optical connector shown in FIGS. 1 and 2 is manufactured.

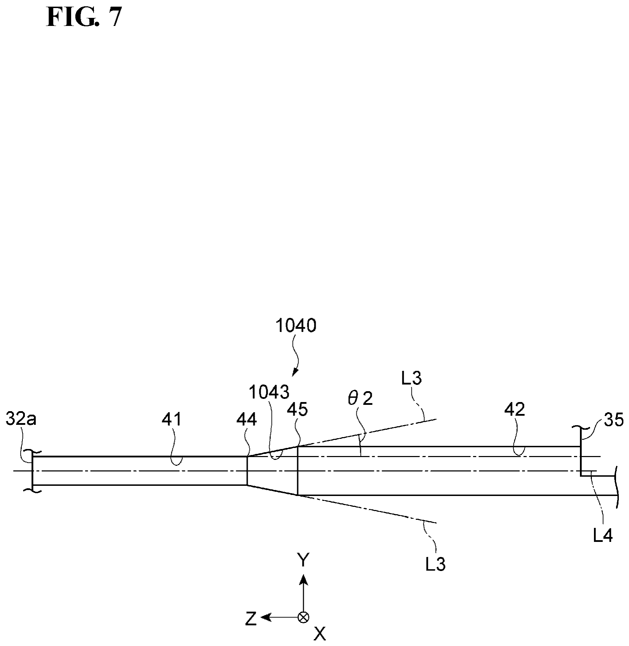

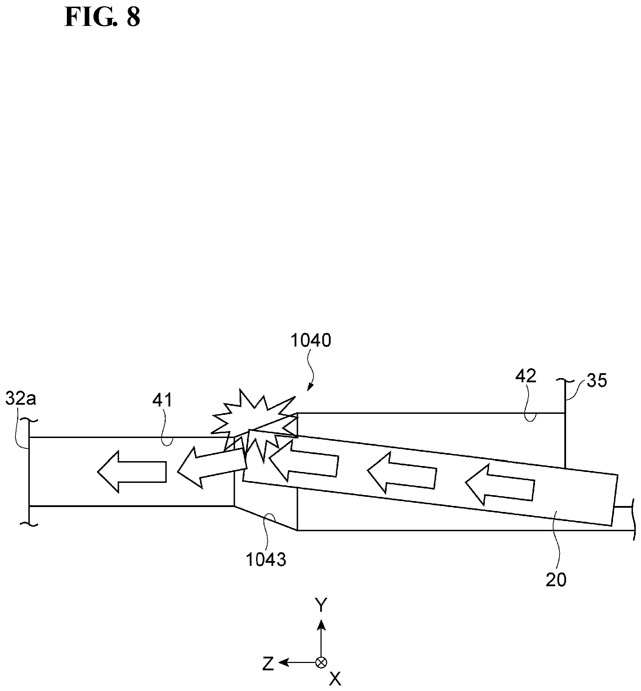

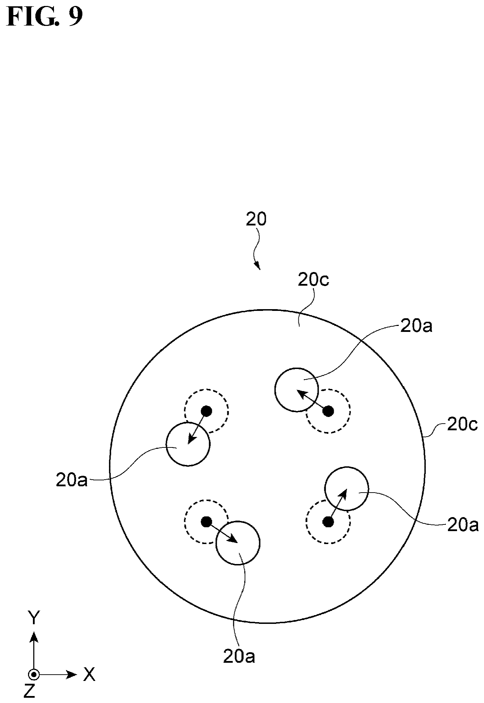

Hereinafter, the effect when the optical connector 1 is manufactured using the ferrule 30 will be described in comparison with the case where a conventional ferrule is used. FIG. 7 is a schematic view showing a fiber insertion hole of the conventional ferrule. FIGS. 8 and 9 are schematic views for explaining a case where the MCF 20 is inserted into the conventional fiber insertion hole.

In a fiber insertion hole 1040 of the conventional ferrule, an angle θ2 between a centerline axis L4 of the fiber insertion hole 1040 and a straight line L3 connecting the front end 44 and the rear end 45 of a tapered portion 1043 in a cross section along the centerline axis L4 is from 15 degrees to 20 degrees. When the MCF 20 is inserted into the conventional fiber insertion hole 1040, the MCF 20 is not necessarily parallel or coaxial with the centerline axis L4 of the fiber insertion hole 1040, but is inserted at various angles. Thus, as shown in FIG. 8, the MCF 20 is introduced into the introduction portion 42, and then introduced into the fiber holding portion 41 (aligned in the direction of the fiber holding portion 41) while coming into strong contact with the inner surface of the tapered portion 1043 and receiving a friction force from the inner surface of the tapered portion 1043. As shown in FIG. 9, the MCF 20 rotates in the tapered portion 1043 due to the friction force, and the position of the core 20a of the MCF 20 is shifted along the circumferential direction of the MCF 20. If the MCF 20 is fixed in such a misaligned state to form the optical connector 1, the optical coupling efficiency between the MCF 20 of the optical connector 1 and the MCF held by another ferrule is reduced.

On the other hand, in the ferrule 30 according to the embodiment, the angle between the centerline axis L2 of each of the plurality of fiber insertion holes 40 and the straight line L1 connecting the front end 44 and the rear end 45 of the tapered portion 43 in the cross section along the centerline axis L2 is 1 degree to 14 degrees, and the shape of the tapered portion 43 is a gently tapered shape. As described above, according to the taper configuration which is gentler than the conventional taper configuration, when the MCF 20 is inserted into the fiber insertion hole 40 and comes into contact with the inner surface 43a of the tapered portion 43, the friction force received from the inner surface 43a of the tapered portion 43 is reduced as compared with the ferrule having the conventional fiber insertion hole 1040. Thus, the MCF 20 is prevented from rotating when the MCF 20 is inserted into the fiber insertion hole 40, and the plurality of cores 20a of the MCF 20 is prevented from causing a deviation (axial deviation) along the circumferential direction (the MCF 20 is less likely to rotate). As a result, when the MCF 20 requiring rotational alignment is inserted into the ferrule 30, the axial deviation of the MCF 20 is reduced, and thus a decrease in optical coupling efficiency between the MCF 20 and the MCF 20 of another ferrule 30 can be reduced.

In the ferrule 30 according to the embodiment, the straight line L1 coincides with the inner surface 43a of the tapered portion 43 in the cross section along the centerline axis L2. In this case, since the inner surface 43a of the tapered portion 43 is flat, the MCF 20 in contact with the inner surface 43a of the tapered portion 43 is further prevented from rotating to cause the axial deviation. As a result, when the MCF 20 requiring rotational alignment is inserted into the ferrule 30, the axial deviation of the MCF 20 is further reduced, and thus a decrease in optical coupling efficiency between the MCF 20 and the MCF 20 held by another ferrule 30 can be further reduced.

In the ferrule 30 according to the embodiment, each of the plurality of fiber insertion holes 40 further includes the introduction portion 42. The introduction portion 42 extends from the introduction hole 35 along the Z direction and communicates with the tapered portion 43 at the rear end 45. The introduction portion 42 has a constant inner diameter. In this case, since the introduction portion 42 configured to first receive the MCF 20 introduced from the introduction hole 35 has a constant inner diameter, the MCF 20 can be inserted into the fiber insertion hole 40 while preventing the MCF 20 from coming into contact with the inner surface 42a of the introduction portion 42. As described above, when the MCF 20 is inserted into the fiber insertion hole 40, the MCF 20 is further prevented from rotating to cause the axial deviation.

In the ferrule 30 according to the embodiment, a ratio of the length of the tapered portion 43 to the length of each of the plurality of fiber insertion holes 40 in the Z direction is from 1/5 to 3/4. In this case, since the ratio of the lengths is 3/4 or less, the fiber holding portion 41 of the fiber insertion hole 40 can be sufficiently long in the Z direction. Thus, each fiber holding portion 41 can stably support each MCF 20. Further, since the ratio of the lengths is 1/5 or more, the tapered portion 43 can be sufficiently long in the Z direction. Thus, the inner diameter of the tapered portion 43 at the rear end 45 can be sufficiently increased, and thus when the MCF 20 is inserted into the fiber insertion hole 40, the MCF 20 is further prevented from coming into contact with the inner surface 43a of the tapered portion 43 in the vicinity of the rear end 32b and rotating to cause the axial deviation.

In the ferrule 30 according to the embodiment, an angle between the centerline axis L2 of each of the plurality of fiber insertion holes 40 and the straight line L1 in the cross section along the centerline axis L2 may be from 5 degrees to 10 degrees. In this case, when the MCF 20 is inserted into the fiber insertion hole 40, the MCF 20 is further prevented from rotating to cause the axial deviation. As a result, when the MCF 20 requiring rotational alignment is inserted into the ferrule 30, the axial deviation of the MCF 20 is further reduced, and thus a decrease in optical coupling efficiency between the MCF 20 and the MCF 20 held by another ferrule 30 can be further reduced.

In the ferrule 30 according to the embodiment, the inner diameter of the introduction portion 42 is larger than the inner diameter of the fiber holding portion 41. In this case, each fiber holding portion 41 can stably hold the end portion 21 of each MCF 20, and the insertability of the MCF 20 into the introduction portion 42 can be improved.

The optical connector 1 according to an embodiment includes the ferrule 30 and the plurality of MCFs 20 each having the plurality of cores 20a. The plurality of MCFs 20 is held in the plurality of fiber insertion holes 40, respectively. In the optical connector 1, the plurality of MCFs 20 is fixed to the ferrule 30. According to this configuration, when the MCF 20 is inserted into the fiber insertion hole 40, the MCF 20 is prevented from rotating to cause the axial deviation. Thus, when the MCF 20 requiring rotational alignment is inserted into the ferrule 30, the axial deviation of the MCF 20 is reduced, and thus a decrease in optical coupling efficiency between the MCF 20 and the MCF 20 held by another ferrule 30 can be reduced.

A method of manufacturing the optical connector 1 according to an embodiment includes preparing the ferrule 30, preparing the plurality of MCFs 20 each having the plurality of cores 20a, and inserting the corresponding MCF 20 of the plurality of MCFs 20 into each of the plurality of fiber insertion holes 40. In the method of manufacturing the optical connector 1, the ferrule 30 having the fiber insertion hole 40 with a gently tapered shape is used, and the MCF 20 is inserted into the fiber insertion hole 40. Thus, the MCF 20 is prevented from rotating to cause the axial deviation. Thus, when the MCF 20 requiring the rotational alignment is inserted into the ferrule 30, the axial deviation of the MCF 20 is further reduced, and thus it is possible to achieve the optical connector 1 capable of further reducing the decrease in the optical coupling efficiency between the MCF 20 and the MCF 20 held by another ferrule 30.

Although the ferrule 30, the optical connector 1, and the method of manufacturing the optical connector 1 according to the present disclosure have been described in detail above, the present disclosure is not limited to the above embodiments, and can be applied to various embodiments and modifications. In the above embodiment, the plurality of MCFs 20 is inserted into the plurality of fiber insertion holes 40, but there is no limitation to this. For example, the plurality of optical fibers 20 may be inserted into the plurality of fiber insertion holes 40, respectively, and the optical fibers 20 may be optical fibers requiring rotational alignment. For example, the optical fiber 20 may be any one of a polarization-maintaining fiber and a bundle fiber, or may be an optical fiber other than the above. In this case, since the optical fiber 20 is an optical fiber requiring rotational alignment, the axial deviation of the optical fiber 20 is reduced when the optical fiber 20 is inserted into the ferrule 30, and thus it is possible to reduce a decrease in optical coupling efficiency between the optical fiber 20 and the optical fiber 20 held by another ferrule 30.

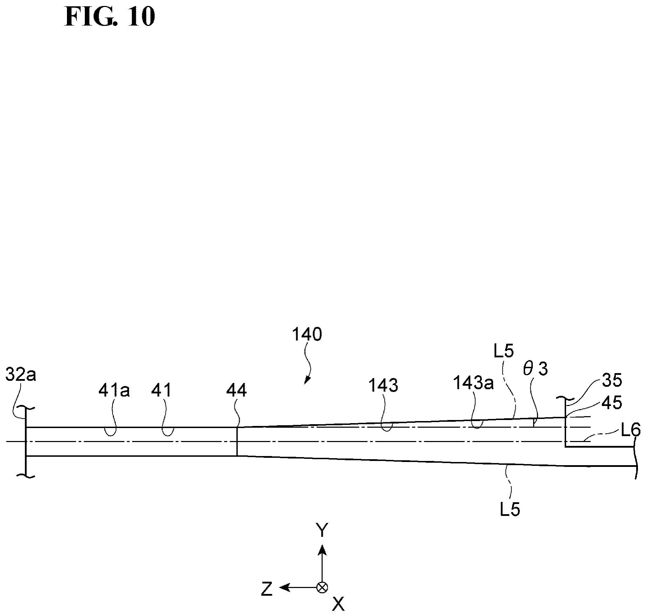

In the above embodiment, the ferrule 30 has the plurality of fiber insertion holes 40, but there is no limitation to this. FIGS. 10 to 12 are schematic views showing various shapes of the fiber insertion hole of the ferrule 30 according to a modification.

### [First Modification]

As shown in FIG. 10, a fiber insertion hole 140 according to a first modification does not have the introduction portion 42, unlike the fiber insertion hole 40. That is, the fiber insertion hole 140 is configured to have only the fiber holding portion 41 and a tapered portion 143. The fiber holding portion 41 extends from the front end 32a toward the introduction hole 35 along the Z direction. The tapered portion 143 communicates with the fiber holding portion 41 at the front end 44. The tapered portion 143 extends from the front end 44 to the rear end 45 along the Z direction. The tapered portion 143 communicates with the introduction hole 35 at the rear end 45. The inner diameter of the tapered portion 143 at the front end 44 is smaller than the inner diameter of the tapered portion 143 at the rear end 45. The inner diameter of the tapered portion 143 increases from the front end 44 toward the rear end 45. The change in the inner diameter of the tapered portion 143 is constant. An angle θ3 between a straight line L5 (tapered straight line) connecting the front end 44 and the rear end 45 of the tapered portion 143 in the cross section along a centerline axis L6 of the fiber insertion hole 140 and the centerline axis L6 of the fiber insertion hole 140 is the same angle as the angle θ1 of the above embodiment. In the cross section along the centerline axis L6 of the fiber insertion hole 140, the straight line L5 coincides with an inner surface 143a of the tapered portion 143. For example, the intersection line between the inner surface 143a of the tapered portion 143 and the cross section along the centerline axis L6 is a straight line.

### [Second Modification]

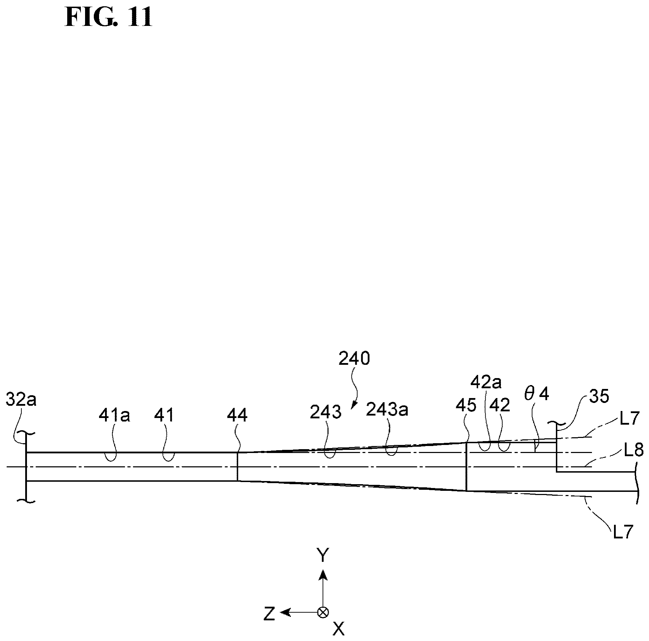

As shown in FIG. 11, a fiber insertion hole 240 according to a second modification includes the fiber holding portion 41, the introduction portion 42, and a tapered portion 243 connecting the fiber holding portion 41 and the introduction portion 42. In the fiber insertion hole 240, the inner diameter of the tapered portion 243 at the front end 44 is smaller than the inner diameter of the tapered portion 243 at the rear end 45. The inner diameter of the tapered portion 243 increases from the front end 44 toward the rear end 45. In the fiber insertion hole 240, unlike the fiber insertion hole 40, the change in the inner diameter of the tapered portion 243 is not constant. For example, the slope of an inner surface 243a of the tapered portion 243 becomes gentler as it approaches the front end 44 (the gradient of the inner surface 243a continuously changes toward the front end 44). Specifically, in the cross section along a centerline axis L8 of the fiber insertion hole 240, an imaginary straight line L7 (tapered straight line) connecting the front end 44 and the rear end 45 of the tapered portion 243 may not coincide with the inner surface 243a of the tapered portion 243. An angle between a tangent line at a contact point on the inner surface 243a of the tapered portion 243 and the centerline axis L8 of the fiber insertion hole 240 decreases as the contact point approaches the front end 44 in the Z direction. At the front end 44, the inner surface 243a of the tapered portion 243 is continuous with the inner surface 41a of the fiber holding portion 41. For example, at the front end 44, the inner surface 243a of the tapered portion 243 is flush with the inner surface 41a of the fiber holding portion 41. An angle θ4 between the imaginary straight line L7 in the cross section along the centerline axis L8 of the fiber insertion hole 240 and the centerline axis L8 of the fiber insertion hole 240 is the same angle as the angle θ1 of the above embodiment.

In the fiber insertion hole 240 according to the second modification, in the cross section along the centerline axis L8, an angle between a tangent line at a contact point on the inner surface 243a of the tapered portion 243 and the centerline axis L8 of the fiber insertion hole 240 decreases as the contact point approaches the front end 44 in the Z direction. This is the case. As the contact point approaches the front end 44 of the tapered portion 243, the slope of the inner surface 243a of the tapered portion 243 becomes gentler. Thus, the friction force that the MCF 20 receives from the inner surface 243a of the tapered portion 243 in the vicinity of the front end 44 of the tapered portion 243 can be further reduced. In addition, the inner diameter of the tapered portion 243 at the rear end 45 can be increased without changing the length of the tapered portion 243 in the Z direction. Thus, the MCF 20 is prevented from coming into contact with the inner surface 243a of the tapered portion 243 in the vicinity of the rear end 45 when the MCF 20 is inserted into the fiber insertion hole 40. As described above, when the MCF 20 is inserted into the fiber insertion hole 40, the MCF 20 is further prevented from rotating to cause the axial deviation. As a result, when the MCF 20 requiring rotational alignment is inserted into the ferrule 30, the axial deviation of the MCF 20 is further reduced, and thus a decrease in optical coupling efficiency between the MCF 20 and the MCF 20 held by another ferrule 30 can be further reduced.

### [Third Modification]

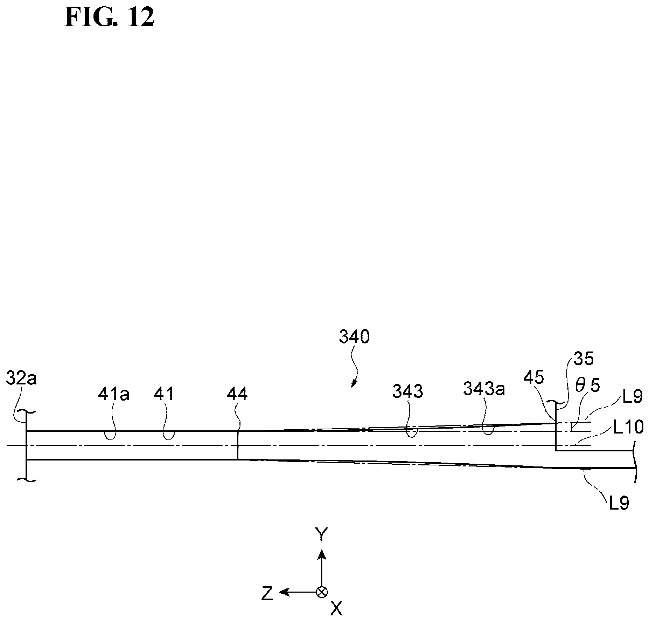

As shown in FIG. 12, a fiber insertion hole 340 according to a third modification does not have the introduction portion 42, unlike the fiber insertion hole 240 according to the second modification. This fiber insertion hole 340 is configured to have only the fiber holding portion 41 and a tapered portion 343. The tapered portion 343 and the fiber holding portion 41 extends from the front end 32a toward the introduction hole 35 along the Z direction. The tapered portion 343 communicates with the fiber holding portion 41 at the front end 44. The tapered portion 343 extends from the front end 44 to the rear end 45 along the Z direction. The tapered portion 343 communicates with the introduction hole 35 at the rear end 45. The inner diameter of the tapered portion 343 at the front end 44 is smaller than the inner diameter of the tapered portion 343 at the rear end 45. The inner diameter of the tapered portion 343 increases from the front end 44 toward the rear end 45. The change in the inner diameter of the tapered portion 343 is not constant. For example, an inner surface 343a of the tapered portion 343 may become gentler as it approaches the front end 44 (the gradient of the inner surface 343a may continuously change toward the front end 44). An angle θ5 between a centerline axis L10 of the fiber insertion hole 340 and an imaginary straight line L9 (tapered straight line) connecting the front end 44 and the rear end 45 of the tapered portion 343 in the cross section along the centerline axis L10 is the same angle as the angle θ1 of the above embodiment. An angle between a tangent line at a contact point on the inner surface 343a of the tapered portion 343 and the centerline axis L10 of the fiber insertion hole 340 may decrease as the contact point approaches the front end 44 in the Z direction. The inner surface 343a of the tapered portion 343 is continuous with the inner surface 41a of the fiber holding portion 41 at the front end 44. For example, the inner surface 343a of the tapered portion 343 is flush with the inner surface 41a of the fiber holding portion 41 at the front end 44. The fiber insertion hole 340 according to the third modification provides the same effects as the effects provided by the fiber insertion hole 240 according to the second modification.

### REFERENCE SIGNS LIST

1 optical connector
10 holding component
20 MCF (optical fiber)
20a core
20b cladding
20c end surface
21 end portion
22 coating portion
22a first end
23 coating-removed portion
30 ferrule
31 ferrule body
32a front end (ferrule front end)
32b rear end (ferrule rear end)
33 front end surface
34 opening
35 introduction hole
36 guide hole
37 window
40 fiber insertion hole
41 fiber holding portion
41a inner surface
42 introduction portion
42a inner surface
43 tapered portion
43a inner surface
44 front end (tapered front end)
45 rear end (tapered rear end)
140 fiber insertion hole
143 tapered portion
143a inner surface
240 fiber insertion hole
243 tapered portion
243a inner surface
340 fiber insertion hole
343 tapered portion
343a inner surface
1040 fiber insertion hole
1043 tapered portion
L1, L5 straight line (tapered straight line)
L3 straight line
L7, L9 imaginary straight line (tapered straight line)
L2, L4, L6, L8, L10 centerline axis
01, θ2, θ3, θ4, θ5 angle

## Claims

1. A ferrule comprising:
a ferrule body including a ferrule front end and a ferrule rear end opposite to the ferrule front end in a first direction;
an introduction hole provided in the ferrule body in such a manner as to extend from the ferrule rear end toward the ferrule front end; and
a plurality of fiber insertion holes each configured to be capable of holding an end portion of a corresponding one of a plurality of optical fibers, the plurality of fiber insertion holes extending along the first direction from a portion of the introduction hole positioned near the ferrule front end to the ferrule front end,
wherein each of the plurality of fiber insertion holes includes a tapered portion having a tapered shape and a fiber holding portion communicating with the tapered portion at a position near the ferrule front end and extending to the ferrule front end along the first direction,
wherein the tapered portion includes a tapered front end and a tapered rear end opposite to the tapered front end in the first direction and extends from the tapered rear end to the tapered front end such that an inner diameter of the tapered portion at the tapered front end is smaller than an inner diameter of the tapered portion at the tapered rear end, and
wherein an angle between a centerline axis of each of the plurality of fiber insertion holes and a tapered straight line, the tapered straight line connecting the tapered front end and the tapered rear end of the tapered portion in a cross section along the centerline axis, is from 1 degree to 14 degrees.

2. The ferrule according to claim 1,
wherein each of the tapered straight lines coincides with an inner surface of a corresponding one of the tapered portions in the cross section taken along a corresponding one of the centerline axes.

3. The ferrule according to claim 1,
wherein an angle between a tangent line at a contact point on an inner surface of each of the tapered portions and a corresponding one of the centerline axes in the cross section taken along the centerline axis decreases as the contact point comes closer to a corresponding one of the tapered front ends in the first direction.

4. The ferrule according to any one of claim 1 to claim 3,
wherein each of the plurality of fiber insertion holes further includes an introduction portion extending from the introduction hole along the first direction and communicating with the tapered portion at the tapered rear end, and
wherein the introduction portion has a constant inner diameter.

5. The ferrule according to any one of claim 1 to claim 4,
wherein a ratio of a length of each of the tapered portions to a length of a corresponding one of the plurality of fiber insertion holes in the first direction is from 1/5 to 3/4.

6. The ferrule according to any one of claim 1 to claim 5,
wherein the angle between the centerline axis of each of the plurality of fiber insertion holes and a corresponding one of the tapered straight lines in a cross section taken along the centerline axis is from 5 degrees to 10 degrees.

7. An optical connector comprising:
the ferrule according to any one of claim 1 to claim 6; and
a plurality of optical fibers each configured to be held in a corresponding one of the plurality of fiber insertion holes,
wherein each of the plurality of optical fibers is any one of a multi-core optical fiber, a polarization-maintaining fiber, and a bundle fiber.

8. A method of manufacturing an optical connector, the method comprising:
preparing the ferrule according to any one of claim 1 to claim 6;
preparing a plurality of optical fibers; and
inserting each of the plurality of optical fibers into a corresponding one of the plurality of fiber insertion holes,
wherein, in the preparing the plurality of optical fibers, each of the plurality of optical fibers is any one of a multi-core optical fiber, a polarization-maintaining fiber, and a bundle fiber.
